# EUROPEAN PATENT APPLICATION

(11) **EP 3 563 678 A1**
(43) Date of publication of application: **06.11.2019**
(21) Application number: 17887786.6
(22) Date of filing: 27.12.2017
(51) Int. Cl.: A01K 61/10, A23K 20/174, A23K 20/184, A23K 50/80

(54) **BREEDING WATER FOR ANGUILLIFORMES AND METHOD FOR REARING ANGUILLIFORMES**

(30) Priority: 28.12.2016 JP 2016255015
(71) Applicant: Shin Nippon Biomedical Laboratories, Ltd., Kagoshima 891-1394 (JP)
(72) Inventor: NAGATA, Ryoichi, Kagoshima-shi, Kagoshima 891-1394 (JP); KAWAKAMI, Yutaka, Kagoshima-shi, Kagoshima 891-1394 (JP)
(74) Representative: Moser Götze & Partner Patentanwälte mbB
(86) International application number: PCT/JP2017/046842
(87) International publication number: WO 2018/124160

(57) **Abstract**

[Problem] To provide breeding water for anguilliformes, and a method for rearing anguilliformes using the breeding water, in order to artificially control the transformation of glass eels and the like and produce glass eels and the like in the same size and form with a shorter period until birth. [Solution] Anguilliformes breeding water containing a thyroid hormone such as thyroxine, and a method for rearing anguilliformes including a step for administering a thyroid hormone such as thyroxine, wherein the amount of the thyroid hormone to be administered changes as the anguilliforme fingerling changes from a transformation start phase (stage 1) to a transformation final phase (stage 2), and the amount of the thyroid hormone to be administered in the transformation final phase (stage 2) is less than the amount of the thyroid hormone to be administered in the transformation start phase (stage 1).

## Description

### Technical Field

The present invention relates to breeding water for Anguilliformes containing a hormone related to metamorphosis, and also to a method for rearing eels using the breeding water.

### Background Art

Larvae of Anguilliformes are called "leptocephalus". They are characterized by having a leaf shape, and thus are also called "leaf-shaped larva" (see Non Patent Literature 1). In Anguilla japonica, in the past, leptocephali have been successfully reared using a feed based on shark eggs (See Patent Literature 1). Then, a nutrient-enriched feed based on shark eggs and having added thereto a depolymerized soybean peptide, a krill extract, a vitamin, and the like has been developed. Further, it is believed that chicken eggs are also usable as a replacement for shark eggs (see Patent Literature 2). However, even now, it is believed that feeds based on shark eggs are the most excellent in terms of growth.

A paste feed based on shark eggs, such as of dog fish (Squalus acanthias), is a feed developed to suit the preference and digestion/absorption capability of Anguilla japonica leptocephali (see Non Patent Literature 2), and use of this feed has made it possible to artificially produce glass eels. It is considered that in the natural world, the number of days required from hatching to becoming glass eels is 160 to 180 days (see Non Patent Literature 3). Because the total length of glass eels caught in the nature is about 60 mm (see Non Patent Literature 4), it is considered that the body size that reaches the maximum length, that is, the metamorphosable body size, is a total length of 60 mm or more. Meanwhile, in artificially produced leptocephali, it is believed that the metamorphosable size is a total length of 50 to 60 mm. In order to grow leptocephali to such a body size, it is necessary to perform breeding usually for a period of time as long as 200 days or more using a shark egg feed, and some individuals even take 400 days or more (see Non Patent Literature 5). There is a concern that such prolongation of the seed production period has led to a decrease in the survival rate and an increase in the production cost. Further, even when the body size that is believed to be metamorphosable is reached, the timing to start metamorphosis varies significantly among individuals (see Non Patent Literature 6). In seed production, it is indispensable to produce a large number of individuals of the same size and the same growth stage. When the difference among individual seeds is large, there is an increased concern with the difference in growth after liberation or cannibalization. Accordingly, with the current method, it is extremely difficult to produce glass eels as seeds. Therefore, in order to realize artificial seed production, a technique capable of shortening the production period of glass eels and also producing a large number of glass eels having the same size is necessary.

Like this, with the present breeding method, it is difficult to produce glass eels stably in a large number. Accordingly, the development of a technique capable of shortening the production period of glass eels and further controlling metamorphosis is desired.

### Citation List

### Patent Literature

Patent Literature 1: JP 11-253111 A
Patent Literature 2: JP 2005-13116 A

### Non Patent Literature

Non Patent Literature 1: Atsushi Fukui, Tetsutoshi Watanabe, Itsuro Uotani, 2005., Suruga-wan de saishu sareta maanago youkei kozakana no hentai ni tomonau koudou no henka (Behavioral changes of the conger eel leptocephali with metamorphosis collected in Suruga Bay), Nippon Suisan Gakkaishi 71(3), 378-380.
Non Patent Literature 2: Masatsugu Masuda, Hitoshi Imaizumi, Hiroshi Hashimoto, Kentaro Oda, Hirofumi Furuita, Hiroyuki Matsunari, Kazuhisa Teruya, Hironori Usuki, 2011., Itachizame-ran to aizame-ran wo shutai to shita shiryo ni yoru unagi shoki-shiiku no kanosei (Eggs of the Tiger Shark Galeocerdo cuvier or Gulper Shark Centrophorus atromarginatus as Food for Early-stage Larvae of the Japanese Eel Anguilla japonica), Journal of Fisheries Technology 4 (1), 7-13.
Non Patent Literature 3: Yutaka Kawakami, Noritaka Mochioka, Ryo Kimura, Akinobu Nakazono, 1999., Seasonal changes of the RNA/DNA ratio, size and lipid contents and immigration adaptability of Japanese glass-eels, Anguilla japonica, collected in northern Kyushu, Japan., Journal of Experimental Marine Biology and Ecology 238, 1-19.
Non Patent Literature 4: Yutaka Kawakami, Noritaka Mochioka, Akinobu Nakazono, 1999., Immigration patterns of glass-eels Anguilla japonica entering river in Northern Kyushu., Bulletin of Marine Science 64 (2), 315-327.
Non Patent Literature 5: Hideki Tanaka, Kazuharu Nomura, Tsuyoshi Yamamoto, Hiromi Oku, 2006., Unagi kozakana you shiryou/shiiku shisutemu no kaihatu -sekai de hajimete shirasu-unagi no jinko/seisan ni seikou- (Development of artificial diets and rearing systems for eel larvae- The first success of production of glass eel in captivity -), Fisheries Research Agency Research Report 63-69.
Non Patent Literature 6: Yoshiaki Yamada, Akihiro Okamura, Naomi Mikawa, Tomoko Utoh, Noriyauki Horie, Satoru Tanaka, Micheael J. Miller, Katsumi Tsukamoto, 2009., Ontogenetic changes in phototactic behavior during metamorphosis of artificially reared Japanese eel Anguilla japonica larvae., Marine Ecology Progress Series 379, 241-251.

### Summary of Invention

### Technical Problem

In light of the problems of prior art described above, the present invention has been made to meet the demands in the art. An object thereof is to appropriately use a hormone involved in metamorphosis for leptocephali to artificially control the metamorphosis into glass eels, for example, thereby shortening the period of production and producing a large number of glass eels of the same size and morphology.

### Solution to Problem

The breeding water for Anguilliformes of the present invention contains a thyroid hormone. The thyroid hormone is, for example, thyroxine. That is, the breeding water of the present invention preferably contains thyroxine. The breeding water of the present invention may further contain a vitamin. The breeding water for Anguilliformes of the present invention can be used as breeding water for larvae of Anguilliformes. A feed containing a thyroid hormone can be preferably used.

The method for rearing Anguilliformes of the present invention (e.g., method for producing eels or glass eels) includes a step of administering a thyroid hormone to larvae of Anguilliformes. The method for rearing Anguilliformes is particularly effective in rearing larvae of Anguilliformes. In this method, it is preferable that the dose of the thyroid hormone in the peak phase of metamorphosis (stage 2) is lower than the dose of the thyroid hormone in the starting phase of metamorphosis (stage 1).

In addition, in this method, it is preferable that the dose of the thyroid hormone in the late phase of metamorphosis (stage 3) is lower than the dose of the thyroid hormone in the peak phase of metamorphosis (stage 2).

The specific dose is such that when the dose of the thyroid hormone in the starting phase of metamorphosis (stage 1) is expressed as 1, the dose of the thyroid hormone in the peak phase of metamorphosis (stage 2) is 0.05 to 0.5, and the dose of the thyroid hormone in the late phase of metamorphosis (stage 3) is 0.001 to 0.05.

The step of administering a thyroid hormone is, for example, any one or more of:
a step of mixing a thyroid hormone with a food to administer the thyroid hormone to larvae of Anguilliformes,
a step of mixing a thyroid hormone with breeding water to administer the thyroid hormone to larvae of Anguilliformes, and
a step of directly administering a thyroid hormone to larvae of Anguilliformes.

### Advantageous Effects of Invention

As described above, according to the breeding method developed in the present invention, the growth of the target fish, particularly larvae of Anguilla japonica, can be controlled. As a result, the breeding period can be shortened, and the production of glass eels as seeds can be stabilized.

### Brief Description of Drawings

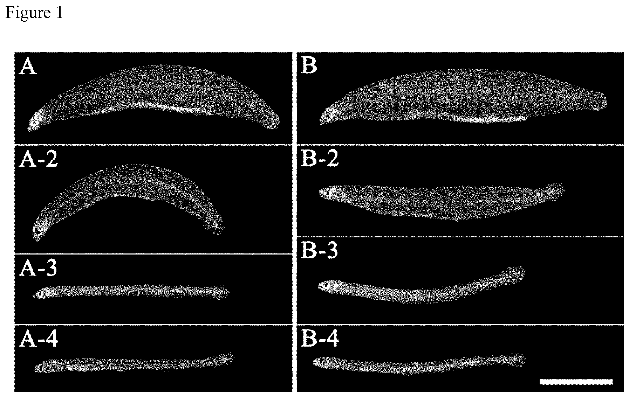

[Fig. 1] Fig. 1 is a picture as a replacement for a drawing showing the rearing conditions of larvae of Anguilliformes in the Examples.

### Description of Embodiments

Hereinafter, embodiments of the present invention will be described using the drawing. The present invention is not limited to the modes described below, and also encompasses suitable modifications made by those skilled in the art within an obvious range.

The breeding method of the present invention is characterized in that a thyroid hormone, for example, which is a metamorphosis-controlling hormone, is added to breeding water to initiate metamorphosis, and further, in the course of metamorphosis, the administration concentration is changed in several stages in appropriate development stages, whereby the production of Anguilliformes, such as glass eels, can be artificially controlled. Breeding water means water for raising Anguilliformes (particularly larvae of Anguilliformes), and Anguilliformes are bred in the breeding water.

Examples of thyroid hormones include thyroxine (T4), triiodo thyronine (T3), reverse triiodo thyronine (rT3), and diiodo thyronine (T2). Further, a hydrated compound such as levothyroxine sodium hydrate may also be used, and one or more of these hormones may be used. One or more of these hormones may be used. Among them, T4 is preferably used. The thyroid hormone is preferably used within a range of 100 µM to 1 pM in the breeding water. These hormones may also be used within a range of 10 nM to 100 pM in the breeding water. Within the above concentration range, metamorphosis is preferably controlled while providing a concentration gradient such that, for example, the concentration is gradually reduced according to the morphological change from the induction of metamorphosis to the metamorphosis into glass eels, for example. In the case where the target species is capable of absorbing the hormone into the body, the breeding water of the present invention can be administered to the target by addition as part of a food, administration by injection, or a like method.

In the breeding water of the present invention, together with the thyroid hormone, a vitamin or a derivative thereof may also be added at the same time. Examples of vitamins include vitamin A, retinoic acid, and vitamin C. Retinoic acid is particularly effective as it forms a hetero dimer with a thyroid hormone.

The method of the present invention can be performed in a static water state or a running water environment. Water is preferably used at a temperature within a range of 20°C to 28°C. Further, water is preferably used within a range of 22°C to 26°C. During induction, breeding is preferably performed under aeration, such as oxygen.

Water contained in the breeding water used in the method of the present invention is not particularly limited. It is possible to use tap water, underground water, hot spring water, natural seawater, distilled water, deionized water, or the like, and it is also possible to use commercially available artificial seawater based on the above water. Further, the salinity is not limited either, but is preferably 0 to 40‰, and still more preferably within a range of 20 to 35‰.

In the method of the invention, the aquarium in which the target fish is placed is not particularly limited. For example, the method of the present invention can be used in aquariums including from 100-mL volume small aquariums to large aquariums of several-hundred-ton class.

The target species to which the method of the present invention is applied is not particularly limited, but leptocephali of Anguilliformes are preferable. Further, leptocephali of the genus Anguilla, such as Anguilla japonica, are preferable. Examples of Anguilliformes include eels, conger eels, pike eels, and moray eels. Among them, eels are preferable. Incidentally, Anguilliformes fishes grow through leptocephali. Thus, although the following description focuses on eels, other kinds of Anguilliformes can also be reared in the same manner.

As the target size to which the method of the present invention is applied, the body size of leptocephali is not particularly limited. However, in the case of Anguilla japonica leptocephali, the total length is preferably 36 mm or more. Further, the total length is preferably 40 mm or more.

Hereinafter, the stages of metamorphosis will be described.

Stage 1: Starting phase of metamorphosis. The rostral end is rounded, and intestinal degeneration starts.

Stage 2: Peak phase of metamorphosis. Intestinal degeneration becomes pronounced. In the second half, the anus reaches to near the last vertical blood vessel (VBV last).

Stage 3: Late phase of metamorphosis. The preanal length (PAL) becomes equal to or shorter than the last vertical blood vessel length (VBV last Length) (PAL ≤ VBV last Length). The body height is apparently low.

Stage 4: Pre-glass eel stage. Almost the eel form, but the body height still remains. Melanophores on the body surface or endogenous melanophores are not yet seen.

Elver stage: Juvenile stage. Food intake can be identified.

### (Preparation of Metamorphosis-Inducing Breeding Water using Thyroid Hormone)

A thyroid hormone (e.g., thyroxine (T4)) is adjusted to 50 to 100 mM in a 1- to 2-mL volume messflask. As a solvent, known solvents (water, alcohol) can be used. Ethanol is preferably used as the solvent.

For example, using ethanol as a solvent, T4 adjusted to 50 mM is diluted 500-fold, 5,000-fold, and 50,000-fold, respectively, and adjusted to 10 µM, 1 µM, and 100 nM. A feed can be prepared in this manner.

Artificial seawater is added to a breeding vessel, and 1/1000 of the 10 nM T4 is added to prepare 10 µM T4 breeding water.

Half of the breeding water is replaced every two days with breeding water of the same concentration. In the case where the concentration is changed, for example, in the case of changing from 10 nM to 2nM, 80% to the breeding water is removed, and unadjusted artificial seawater is newly added to make 1 L.

### (Preparation of Leptocephali and Breeding Method)

Leptocephali visually considered to have reached a total length of 40 mm (or may be 30 mm to 50 mm, may be 35 mm to 45 mm, or may also be 35 mm or more, 40 mm or more, or 45 mm or more) are selected, anesthetized with 2-phenoxyethanol, and then photographed, and the total length of each larva is measured using an image analyzing device.

The larvae are placed in 10 nM T4 breeding water and then placed in an incubator set at 23°C, and breeding is started. In first one week, observation is performed every two days, and half of the 10 nM T4 breeding water is replaced each time. The average amount of thyroid hormone in the breeding water in stage 1 is 1 nM to 100 nM, for example, and may also be 3 nM to 30 nM, or 5 nM to 20 nM.

For larvae visually judged to have reached the second half of stage 2, the concentration of the breeding water is changed. The breeding water is diluted 5-fold or 10-fold and adjusted to 2 nM or 1 nM T4, and breeding is continued. The average amount of thyroid hormone in the breeding water in stage 2 may be, as compared with the breeding water of stage 1, diluted 2-fold to 20-fold, diluted 3 to 15-fold, or diluted 5 to 10-fold as described above. The average amount of thyroid hormone in the breeding water in stage 2 is 0.1 nM to 20 nM, for example, and may also be 0.5 nM to 10 nM, 1 nM to 5 nM, or 1 nM to 2 nM.

For larvae visually judged to have reached stage 3, the breeding water is quickly changed 0.2 nM T4 breeding water, which is a 5-fold dilution of 1 nM T4 breeding water, and further changed to 0.1 nM T4 breeding water on the following day. The concentration may also be directly reduced to 0.1 nM T4. Also in larvae whose anus position has not reached the last vertical hemal spine, when they are judged to be on the brink of stage 3, the concentration is changed as above. The average amount of thyroid hormone in the breeding water in stage 3 may be, as compared with the breeding water of stage 2, diluted 2-fold to 50-fold, diluted 3 to 15-fold, diluted 4 to 6-fold, or diluted 5-fold as described above. The average amount of thyroid hormone in the breeding water in stage 3 is 0.01 nM to 2 nM, for example, and may also be 0.05 nM to 1 nM, 0.1 nM to 0.5 nM, or 0.1 nM to 0.2 nM. As described above, in the case where larvae have reached stage 3, the thyroid hormone concentration in the breeding water may be gradually reduced. That is, the concentration may be changed such that the thyroid hormone becomes undetectable in the breeding water in the course of stage 3.

In stage 3, breeding is continuously performed in the 0.1 nM T4 breeding water. Larvae whose body height has been gradually reduced and which are judged to have almost reached the glass eel form, that is, stage 4, are taken from the T4 breeding water and then bred in fresh water or seawater. After stage 4, there is no need to perform the hormone treatment.

Breeding is continued in fresh water or seawater. The breeding method may be in any mode, such as running water or static water. When the melanophore deposition is gradually seen on the body surface or in the epichordal part, frozen blood worms or live sludge worms are suitably given, and whether food intake occurs is observed. When food intake can be observed, it is judged that the internal morphology has fully transitioned to the eel form, that is, reached elvers (juveniles), and the completion of seed production is defined. In the case of natural seeds, generally, glass eels in the course of metamorphosis (stage 4 or later) are used as seeds. Therefore, for convenience, the completion of seed production may be defined as when stage 4 is reached.

In the case where the treatment with a thyroid hormone is performed in a small container, the progress of metamorphosis may significantly vary due to changes in the water temperature. Therefore, it is preferable to manage the temperature using an incubator, a water bath, or the like capable of temperature regulation. Also in a large container, it is preferable to perform the operation to make the water temperature constant, such as attachment of a temperature regulator.

In order to avoid the decomposition of the hormone during the treatment, the treatment is preferably performed in a darkroom.

The evaluation of the metamorphosis stage may be based on visual judgment. However, in order to obtain stable results, it is preferable that the fish is placed in a container in which fish bodies can be placed, such as a transparent acrylic container having an inner volume of 10 cm in width × 5 cm in height × 1 cm in width, then the body side is photographed, and the position of the preanal length is determined using an image analysis software such as ImageJ (NIH).

With respect to the breeding water used for the thyroid hormone treatment, it is preferable to use the same breeding water during the treatment. However, after metamorphosis into glass eels, in the case where artificial seawater has been used until then, for example, the breeding water may be changed to one having low or no salinity, such as fresh water, whereby the subsequent development into juveniles can be promoted.

In order to identify the food intake of glass eels and later forms, live sludge worms, frozen blood worms, and the like, which are suitable as an initial sample, are given. For small individuals, a food prepared to suit the mouth diameter, such as mince, may be given.

Hereinafter, examples of the present invention using Anguilla japonica leptocephali will be given. The present invention is not limited in any way by these examples.

### Examples

### (Preparation of Leptocephali 1)

Anguilla japonica leptocephali hatched from fertilized eggs obtained by artificial maturation and raised using a conventional feed based on dog fish eggs (see Non Patent Literature 1) were used. A 10-L circular acrylic aquarium was prepared. Seawater was poured into the aquarium to make a volume of 5 L. The number of eels leptocephali placed in the aquarium was about 200. Anguilla japonica leptocephali were acclimated to the aquarium, and then a feed equivalent to 3 mL was administered to the bottom surface of the aquarium with a pipet to start feeding. During the feeding period, water was stopped for 15 minutes to perform feeding. After a lapse of 15 minutes, the food remaining on the bottom surface was washed away at a flow rate of 0.5 to 0.6 L per minute. The above operation was repeated every two hours and performed a total of five times. The feeding time was scheduled at 9:00, 11:00, 13:00, 15:00, and 17:00. After feeding five times, the Anguilla japonica leptocephali were transferred to an aquarium of the same type. At times other than feeding, water was continuously poured at a flow rate of 0.5 to 0.6 L per minute. Through all the feeding periods, filtered seawater at 25°C was allowed to flow.

### (Preparation of Leptocephali 2)

From leptocephali that had reached 175 days old, larvae having a total length of 38.5 to 43.5 mm were selected, and the operation of the present invention was performed. Further, 174-day-old larvae having a total length of 36.1 mm and those of 34.5 mm were used.

### (Seed Evaluation)

Larvae that had reached stage 4 were further continuously bred in fresh water, and individuals in which food intake was seen were defined as juveniles and judged to be applicable as seed individuals.

### 2. Example Results:

The results of the example are shown in Table 1. Juveniles were successfully produced from leptocephali having a total length 36.1 mm or more. However, with respect to leptocephali having a total length of 34.5 mm, although stage 4 was reached, they did not gain the food intake ability. It turned out that use of the prevent invention makes it possible to simultaneously induce metamorphosis, and, as a result, the seed production period can be shortened.

Table 1 shows the induction of Anguilla japonica metamorphosis by T4 treatment in a 23°C breeding water.

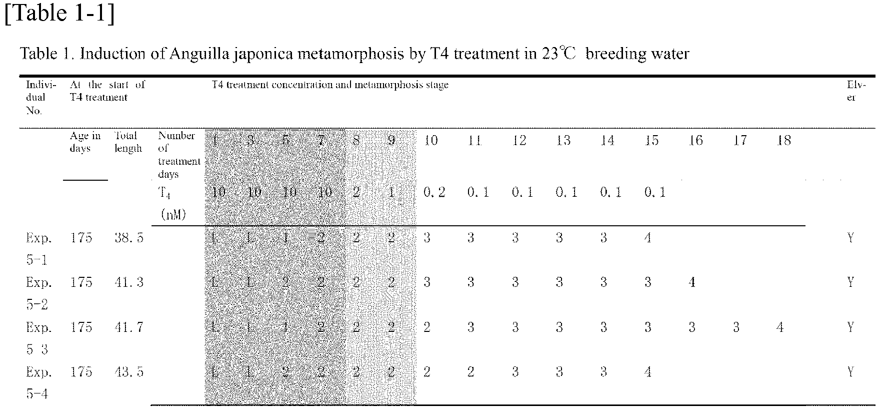

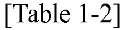

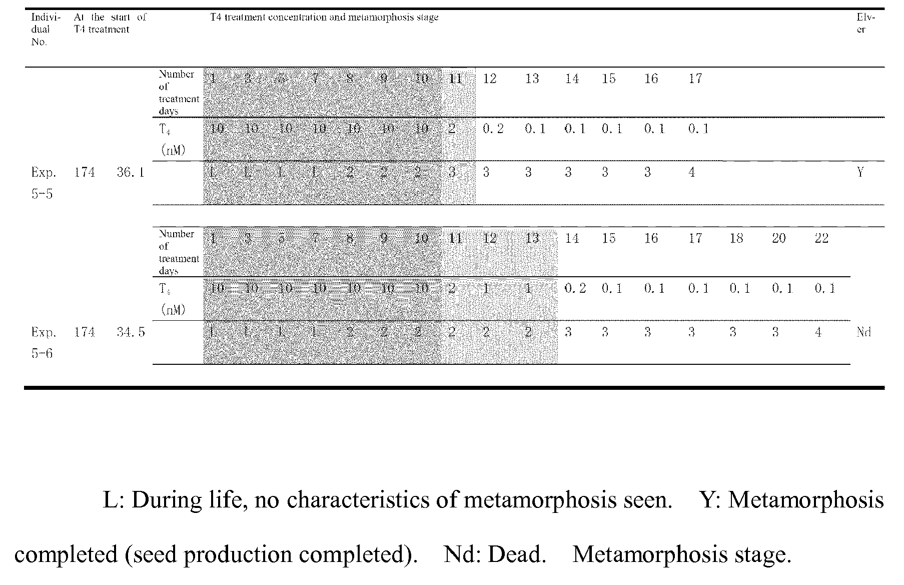

### [Example 2]

### (Preparation of Leptocephali)

From leptocephali that had reached 129 days old, larvae having a total length of 29.8 to 40.6 mm were selected, and the present invention was performed.

Example Results: The results of the example are shown in Table 2 and Fig. 1. Juveniles were successfully produced from leptocephali having a total length 36.6 mm or more. However, with respect to leptocephali having a total length of 36.4 mm or less, although some of them reached stage 4, the metamorphosis did not progress smoothly, and they died during induction or did not gain the food intake ability. From above, it is considered that the threshold for leptocephali capable of seed production exists around a total length of 36 mm, and it turned out that when leptocephali that have reached a total length of 37 mm or more are prepared, and the present invention is performed, Anguilla japonica seeds can be produced. In addition, it turned out whether seed production using the present invention is possible depends not on the age of leptocephali in days but on their body size.

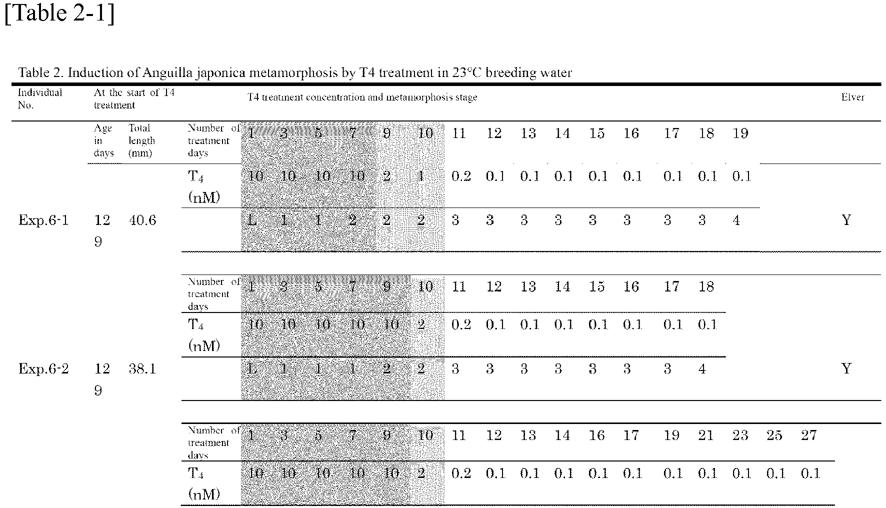

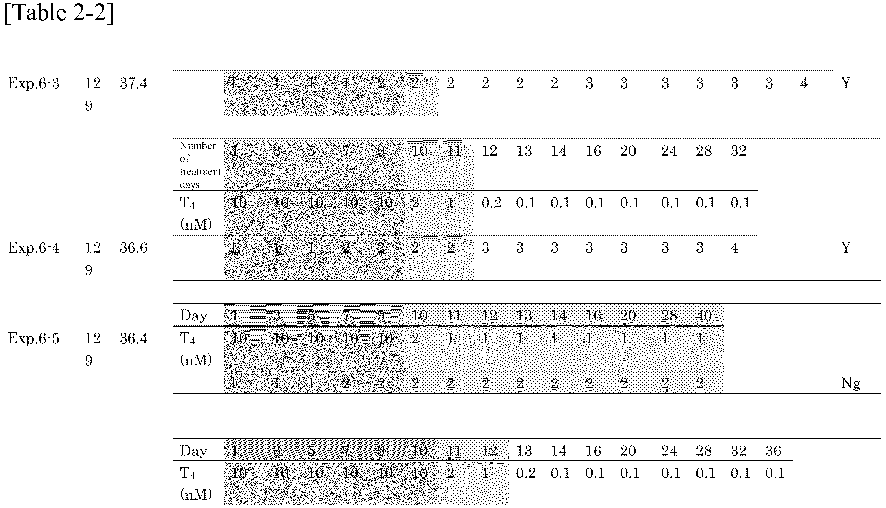

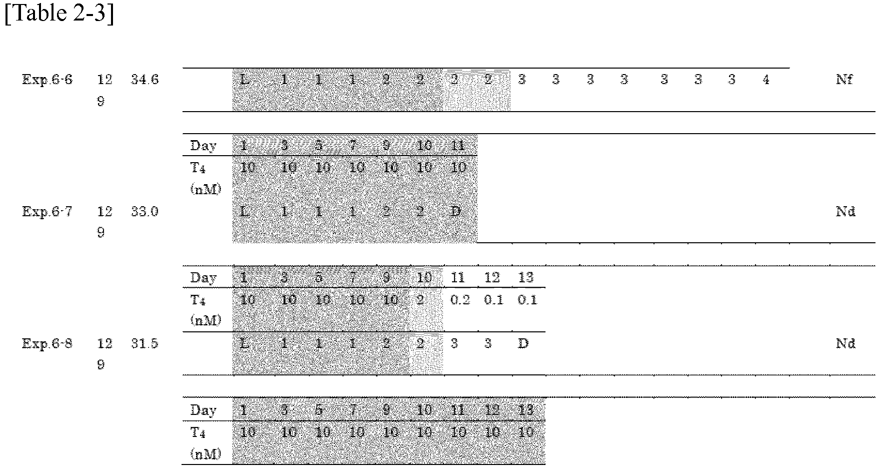

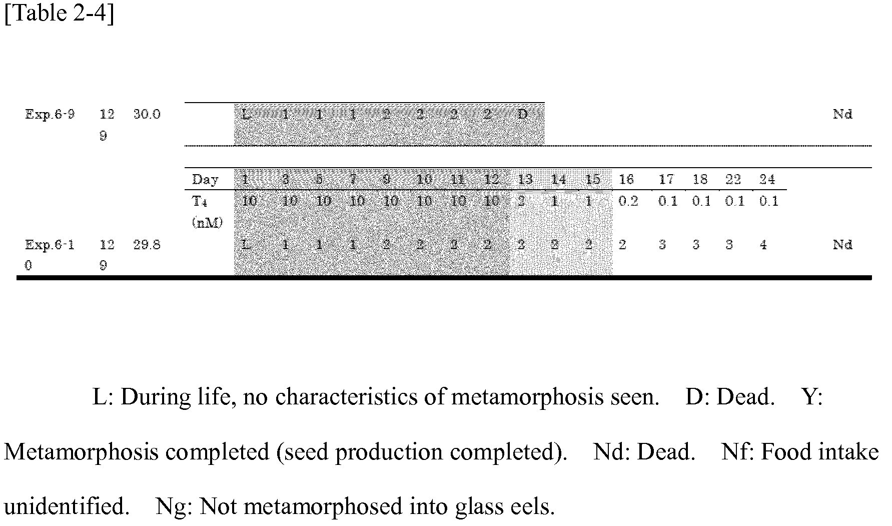

Fig. 1 is a picture as a replacement for a drawing showing the rearing conditions of larvae of Anguilliformes in the Examples.

A shows the start of T4 treatment (Exp 6-2, total length: 38.1 mm), A-2 shows 10 days after the start of treatment, A-3 shows 27 days later, and A-4 shows 46 days later.

B shows the start of T4 treatment (Exp 6-4, total length: 36.6 mm), B-2 shows 10 days after the start of treatment, B-3 shows 37 days later, and B-4 shows 63 days later. The scale bar is 10 mm.

### Industrial Applicability

The present invention is applicable in the fishing industry.

## Claims

1. Breeding water for Anguilliformes, comprising a thyroid hormone.

2. The breeding water for Anguilliformes according to claim 1, wherein the thyroid hormone contains thyroxine.

3. The breeding water for Anguilliformes according to claim 1 or 2, further containing a vitamin.

4. The breeding water for Anguilliformes according to claim 1, which is breeding water for larvae of Anguilliformes.

5. A method for rearing Anguilliformes, comprising a step of administering a thyroid hormone.

6. The method according to claim 5, wherein
the dose of the thyroid hormone is changed as larvae of Anguilliformes shift from a starting phase of metamorphosis (stage 1) to a peak phase of metamorphosis (stage 2), and
the dose of the thyroid hormone in the peak phase of metamorphosis (stage 2) is lower than the dose of the thyroid hormone in the starting phase of metamorphosis (stage 1).

7. The method according to claim 6, wherein
the dose of the thyroid hormone is changed as larvae of Anguilliformes shift from the peak phase of metamorphosis (stage 2) to a late phase of metamorphosis (stage 3), and
the dose of the thyroid hormone in the late phase of metamorphosis (stage 3) is lower than the dose of the thyroid hormone in the peak phase of metamorphosis (stage 2).

8. The method according to claim 7, wherein
when the dose of the thyroid hormone in the starting phase of metamorphosis (stage 1) is expressed as 1,
the dose of the thyroid hormone in the peak phase of metamorphosis (stage 2) is 0.05 to 0.5, and
the dose of the thyroid hormone in the late phase of metamorphosis (stage 3) is 0.001 to 0.05.

9. The method according to claim 5, wherein
the step of administering the thyroid hormone includes any one or more of:
a step of mixing a thyroid hormone with a food to administer the thyroid hormone to larvae of Anguilliformes,
a step of mixing a thyroid hormone with breeding water to administer the thyroid hormone to larvae of Anguilliformes, and
a step of directly administering a thyroid hormone to larvae of Anguilliformes.
